# EUROPÄISCHE PATENTSCHRIFT

(11) **EP 1 621 793 B1**
(45) Veröffentlichungstag und Bekanntmachung des Hinweises auf die Patenterteilung: **15.08.2007**
(21) Anmeldenummer: 05010019.7
(22) Anmeldetag: 09.05.2005
(51) Int. Cl.: F16F 9/02, F16F 9/48, F16F 9/58

(54) **Gasfeder**
Gas spring
Ressort à gaz

(30) Priorität: 30.07.2004 DE 102004037474; 15.01.2005 DE 102005002007
(43) Veröffentlichungstag der Anmeldung: 01.02.2006
(73) Patentinhaber: Stabilus GmbH, 56070 Koblenz (DE)
(72) Erfinder: Born, Frank, 56379 Dienethal (DE); Mintgen, Rolf, 56743 Thuer (DE); Massmann, Rainer, 53119 Bonn (DE); Schwab, Wilhelm, 56564 Neuwied (DE)
(74) Vertreter: Klein, Thomas

(56) Entgegenhaltungen:
- EP-A- 0 353 549
- EP-A- 1 403 549
- DE-A1- 3 818 811
- DE-A1- 4 000 865
- DE-A1- 4 227 554
- DE-B1- 1 430 494

## Beschreibung

Die Erfindung bezieht sich auf eine Gasfeder mit einem Zylinder, der mit einem unter Druck stehenden Gas gefüllt ist, mit einer einseitig abgedichtet aus dem Zylinder herausgeführten Kolbenstange, deren in den Zylinder ragendes Ende an einem in dem Zylinder verschiebbaren Kolben befestigt ist, durch den der Innenraum des Zylinders in eine kolbenstangenseitige erste Arbeitskammer und eine kolbenstangenferne zweite Arbeitskammer unterteilt ist, wobei eine der Arbeitskammern durch einen in dem Zylinder verschiebbaren Dämpfkolben einer Endlagendämpfung in eine Dämpfkammer und eine Teilkammer unterteilt ist und der Dämpfkolben im Enddämpfbereich der Einschubbewegung der Kolbenstange durch den Kolben beaufschlagbar und in die Dämpfkammer verschiebbar ist, mit einer Drosselverbindung zwischen der Teilkammer und der Dämpfkammer, deren Drosselwirkung bei Verschiebung des Dämpfkolbens durch den Kolben größer ist als bei dem Kolben nacheilender Verschiebung des Dämpfkolbens und mit einer Drosselverbindung zwischen der Teilkammer und der ersten Arbeitskammer, deren Drosselwirkung bei Einschubbewegung der Kolbenstange kleiner ist als bei Ausschubbewegung der Kolbenstange.

Bei einer derartigen Gasfeder ist es bekannt, daß die Einschub- und Ausschubbewegung der Kolbenstange außerhalb des Enddämpfbereichs einen unterschiedlichen Verlauf besitzt.

Im Enddämpfbereich wird die Einschub - und Ausschubbewegung noch mit unterschiedlichen Bewegungscharakteristika überlagert.

Aufgabe der Erfindung ist es eine Gasfeder der eingangs genannten Art zu schaffen, die bei einfachem Aufbau eine größere Differenzierung sowohl des Verlaufs der Ausschubbewegung als auch des Verlaufs der Einschubbewegung der Kolbenstange ermöglicht.

Diese Aufgabe wird erfindungsgemäß dadurch gelöst, daß die Endlagendämpfung in der zweiten Arbeitskammer angeordnet ist, wobei die Dämpfkammer dem verschlossenen Ende des Zylinders und die Teilkammer dem Kolben zugewandt ist, und daß bei Ausschubbewegung der Kolbenstange die Drosselverbindung zwischen der Teilkammer und der ersten Arbeitskammer bei Anlage des Dämpfkolbens an dem Kolben eine geringere Drosselwirkung aufweist als bei Nichtanliegen des Dämpfkolbens an dem Kolben.

Damit wird eine Ausschubbewegung erreicht, die zunächst weitgehend ungedämpft beginnt und sich dann mit normaler Dämpfung fortsetzt.

Die Einschubbewegung erfolgt zunächst weitgehend ungedämpft um dann im Enddämpfbereich gedämpft zu werden.

Um bei der Ausschubbewegung im Enddämpfbereich den Dämpfkolben in Anlage an dem Kolben zu halten, kann der Dämpfkolben von einer am Zylinder abgestützten Nachführfeder in Richtung zum Kolben kraftbeaufschlagt sein.

Zum Erreichen der unterschiedlichen Dämpfverläufe bei Einschub- und Ausschubbewegung des Dämpfkolbens kann in einfacher Weise der Dämpfkolben an seiner radial umlaufenden Mantelfläche eine radial umlaufende Ringnut besitzen, in der ein Dämpfdichtungsring mit axialem Spiel und radialem Spiel zum Boden der Ringnut angeordnet ist, der mit seiner radial äußeren umlaufenden Mantelfläche an der Innenwand des Zylinders in Anlage ist.

Zur Erzeugung eines großen Durchströmquerschnitts bei einer Verschiebung des Dämpfkolbens in Ausschubrichtung weist die der Dämpfkammer zugewandte Seitenwand der Ringnut vorzugsweise die Ringnut mit der Dämpfkammer verbindende Durchbrüche auf.

Eine hohe Dämpfung der Einschubbewegung des Dämpfkolbens erfolgt in einfacher Weise dadurch, daß an der Innenwand des Zylinders eine oder mehrere sich zumindest weitgehend über den Enddämpfbereich erstreckende Dämpfnuten ausgebildet sind.

Dabei ist der wirksame Strömungsquerschnitt der Dämpfnuten geringer als der Strömungsquerschnitt der Durchbrüche.

Der Dämpfungsverlauf kann dabei dadurch ungleichmäßig bestimmt werden, daß die Dämpfnuten einen unterschiedlichen Querschnittsverlauf über ihre Länge besitzen.

Dämpfungsverlauf und Dämpfungsstärke können für die Bereiche der Ausschubdämpfung und der Einschubdämpfung unabhängig voneinander festgelegt werden.

Der Kolben kann eine oder mehrere die erste Arbeitskammer mit der Teilkammer verbindende Düsen aufweisen.

Um die Bewegung des Dämpfkolbens in Einschubrichtung bei hohen Geschwindigkeiten des Dämpfkolbens stärker zu dämpfen als bei geringeren Geschwindigkeiten ist vorzugsweise im Dämpfkolben ein die Dämpfkammer mit der Teilkammer verbindendes Ventil angeordnet, dessen Schießglied vom Druck in der Dämpfkammer aus seiner Offenposition entgegen einer Federkraft in seine Schließposition bewegbar beaufschlagbar ist.

Dazu ist in einfacher Ausbildung das Schließglied ein in einer zylindrischen Führungsöffnung verschiebbar angeordneter Schließschieber und in der zylindrischen Wand der Führungsöffnung sind eine oder mehrere sich axial erstreckende Steuerungsnuten ausgebildet.

Gewicht- und bauraumsparend bei guter Führung des Schließschiebers ist es, wenn der Schließschieber topfartig ausgebildet ist und mit seinem radial umlaufenden Mündungsrand auf einen ringartigen Ventilsitz des Dämpfkolbens aufsetzbar ist.

Dabei kann die auf den Schließschieber wirkende Federkraft von einer am Dämpfkolben abgestützten und in das Innere des Schließschiebers ragenden Druckfeder ausgeübt werden.

Weiterhin kann im Schließglied eine axial durchgehende Düsenbohrung angeordnet sein.

Um ein hartes Anschlagen des Kolbens an dem Dämpfkolben zu vermeiden, ist der Dämpfkolben vorzugsweise über ein elastisch verformbares Pufferelement von dem Kolben verschiebbar beaufschlagbar.

Platz sparend und einfach montierbar ist es dabei, wenn das elastische Pufferelement in einer topfförmigen Ausnehmung im Dämpfkolben angeordnet ist, deren Öffnung zum Kolben gerichtet ist.

Zur normalen Dämpfung der Ausschubbewegung können in einfacher Weise an der Innenwand des Zylinders eine oder mehrere sich zwischen dem Enddämpfbereich und dem kolbenstangenseitigen Ende erstreckende Dämpfungsnuten angeordnet sein.

Ein unterschiedlicher Dämpfungsverlauf über den Ausschubweg wird dadurch erreicht, daß die Dämpfungsnuten einen unterschiedlichen Querschnittsverlauf über ihre Länge besitzen.

Sind dabei die Dämpfungsnuten an ihrem dem Enddämpfbereich entgegengesetzten Ende in ihrem Querschnitt reduziert, so erfolgt am Ende der Ausschubbewegung eine Dämpfungserhöhung zur Vermeidung eines harten Anschlagens in der Endlage.

Zur Freigabe eines großen Strömungsquerschnitts bei Einschubbewegung und Absperren dieses Strömungsquerschnitts bei Ausschubbewegung kann der Kolben von einem mit seiner äußeren radial umlaufenden Mantelfläche an der Innenwand des Zylinders anliegenden Dichtungsring umschlossen sein, der an seinem radial inneren Ringbereich unterströmbar und mit axialem Spiel zwischen zwei Anschlägen bewegbar ist, wobei bei Anlage des Dichtungsrings an dem dem Dämpfkolben näheren Anschlag der Kolben gegenüber der Innenwand des Zylinders abgedichtet ist.

Um auf einfache Weise im Enddämpfbereich auch bei einer Ausschubbewegung einen großen Durchströmquerschnitt zu erhalten, ist vorzugsweise der Dichtungsring bei axialer Beaufschlagung des Dämpfkolbens durch den Kolben von dem dem Dämpfkolben näheren Anschlag des Kolbens abgehoben.

Dazu kann der Dämpfkolben einen zum Kolben gerichteten axialen Anschlag aufweisen, durch den der Dichtungsring von dem dem Dämpfkolben näheren Anschlag des Kolbens abhebbar ist.

Eine andere Möglichkeit besteht darin, daß der Dichtungsring einen zum Dämpfkolben gerichteten hervorstehenden axialen Anschlag aufweist, der axial an den Dämpfungskolben anlegbar ist.

Es ist aber auch möglich, daß an dem Dichtungsring ein axial magnetisierter erster Dauermagnet angeordnet ist, dem ein an dem Dämpfkolben angeordneter weiterer Dauermagnet axial gegenüber liegt, wobei gleiche Pole von erstem Dauermagnet und weiterem Dauermagnet einander zugewandt sind.

So lange der Dämpfungskolben sich zumindest nahe dem Kolben befindet, bewirken die einander abstoßenden gleichen Pole der Dauermagnete ein Abheben des Dichtungsrings von dem dem Dämpfkolben näheren Anschlag des Kolbens.

Zum Öffnen eines großen Durchströmquerschnitts von der Teilkammer zur ersten Arbeitskammer bei einer Ausschubbewegung im Enddämpfbereich kann in dem Kolben ein Ventil angeordnet sein, das bei axialer Beaufschlagung des Kolbens durch den Dämpfkolben die Teilkammer mit der ersten Arbeitskammer verbindend öffnet.

In einfacher Weise ist dabei das Ventil ein Sitzventil sein, dessen Ventilglied durch den Dämpfkolben von seinem Ventilsitz abhebbar ist.

Alternativ dazu kann aber auch der Kolben aus einem ersten, an der Kolbenstange befestigten Kolbenteil bestehen, das von einem koaxial zum ersten Kolbenteil verschiebbaren und den Dichtungsring tragenden ringartigen zweiten Kolbenteil umschlossen ist, mit einer einen Zylinderabschnitt des ersten Kolbenteils mit Spiel umschließenden ringförmigen Dichtung, die mit ihrem radial inneren Bereich an einer zum zweiten Kolbenteil ragenden Ringschulter des ersten Kolbenteils und die mit ihrem überströmbaren radial äußeren Bereich an einer zum ersten Kolbenteil ragenden Ringschulter des zweiten Kolbenteils axial dicht anlegbar ist, wobei die Ringschulter des zweiten Kolbenteils bei dessen axialer Beaufschlagung durch den Dämpfkolben die Teilkammer mit der ersten Arbeitskammer verbindend von der Ringschulter des ersten Kolbenteils wegbewegbar ist.

Ausführungsbeispiele der Erfindung sind in der Zeichnung dargestellt und werden im folgenden näher beschreiben. Es zeigen
- Figur 1: eine Gasfeder im Längsschnitt mit einem Kolben und einem Dämpfkolben
- Figur 2: einen Querschnitt des Zylinders der Gasfeder nach Figur 1 im Enddämpfbereich
- Figur 3: einen Querschnitt eines zweiten Ausführungsbeispiels eines Kolbens
- Figur 4: einen Querschnitt eines dritten Ausführungsbeispiels eines Kolbens
- Figur 5: einen Querschnitt eines vierten Ausführungsbeispiels eines Dämpfkolbens bei niedriger Einschubgeschwindigkeit
- Figur 6: den Dämpfkolben nach Figur 5 bei hoher Einschubgeschwindigkeit
- Figur 7: einen Querschnitt eines zweiten Ausführungsbeispiels von Kolben und Dämpfkolben
- Figur 8: einen Querschnitt eines dritten Ausführungsbeispiels von Kolben und Dämpfkolben
- Figur 9: einen Querschnitt eines vierten Ausführungsbeispiels von Kolben und Dämpfkolben
- Figur 10: einen Querschnitt eines fünften Ausführungsbeispiels von Kolben und Dämpfkolben
- Figur 11: einen Bewegungsverlauf einer von einer Gasfeder antreibbaren Klappe eines Kraftfahrzeugs.

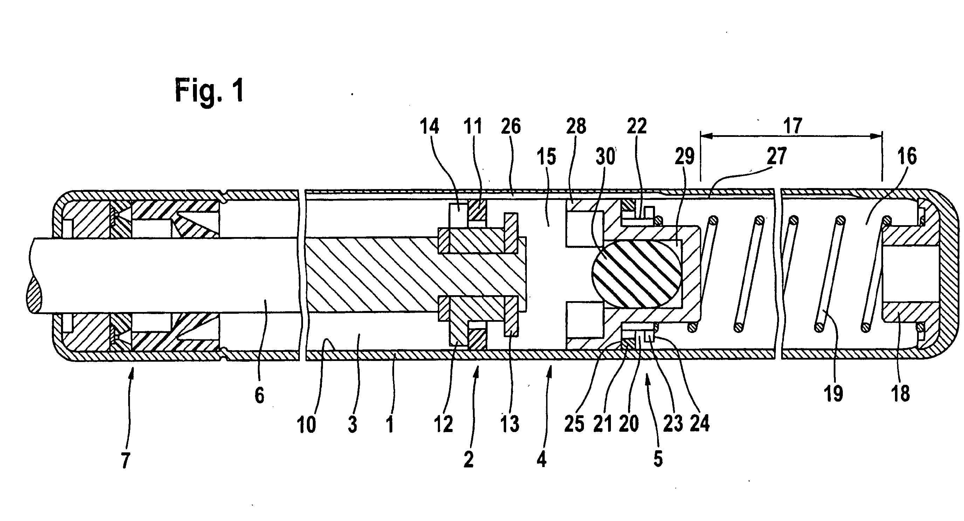

Die Gasfeder in Figur 1 besitzt einen einseitig geschlossenen Zylinder 1, der mit einem unter Druck stehenden Gas gefüllt ist.

Der Innenraum des Zylinders 1 ist durch einen Kolben 2 in eine erste Arbeitskammer 3 und eine zweite Arbeitskammer 4 unterteilt. An dem Kolben 2 ist einseitig eine Kolbenstange 6 befestigt, die an dem dem geschlossenen Ende entgegengesetzten Ende durch ein Dicht- und Führungspaket 7 abgedichtet aus dem Zylinder 1 herausgeführt ist.

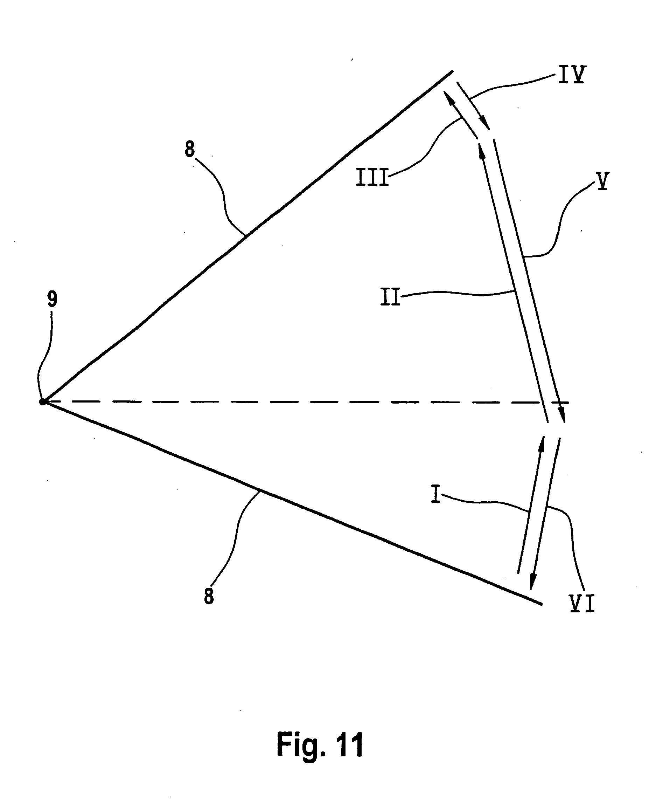

Der Zylinder ist an seinem geschlossenen Ende an einem nicht dargestellten festen Teil einer Karosserie eines Kraftfahrzeugs angelenkt, während das aus dem Zylinder 1 herausragende Ende der Kolbenstange 6 an einer um eine Schwenkachse 9 schwenkbaren Klappe 8 (Figur 11) in einem Abstand zur Schwenkachse 9 angelenkt ist.

Der Kolben 2 ist von einem mit seiner äußeren radial umlaufenden Mantelfläche an der Innenwand 10 des Zylinders 1 anliegenden Dichtungsring 11 umschlossen, der einen geringen Reibwiderstand zur Innenwand 10 des Zylinders 1 besitzt. Der Dichtungsring 11 ist als Rechteckring ausgebildet. Seine Funktion kann aber auch durch einen anderen Dichtungsring wie z.B. einen Nutring oder einen O-Ring erfüllt werden.

Der Dichtungsring 11 ist an seinem radial Inneren Ringbereich unterströmbar und mit axialem Spiel zwischen einem kolbenstangenseitigen Anschlag 12 und einem kolbenstangenferneren Anschlag 13 axial bewegbar.

Bei Anlage des Dichtrings 11 an dem Anschlag 13 ist der Kolben 2 gegenüber der Innenwand 10 des Zylinders 1 angedichtet. Ist der Dichtungsring 11 von dem Anschlag 13 abgehoben, so kann er von Gas unterströmt werden, das von der zweiten Arbeitskammer 4 in die erste Arbeitskammer 3 strömt.

Zur Vermeidung eines wesentlichen Strömungswiderstandes besitzt der Anschlag 12 axiale Durchlässe 14 großen Querschnitts.

Die zweite Arbeitskammer 4 ist durch einen Dämpfkolben 5 in eine kolbennahe Teilkammer 15 und eine kolbenferne Dämpfkammer 16 unterteilt und in dem geschlossenen Endbereich des Zylinders 1, der einen Enddämpfbereich 17 bildet, verschiebbar.

Der Dämpfkolben 5 ist von einer an dem geschlossenen Ende des Zylinders 1 über ein Abstützteil 18 abgestützte Nachführfeder 19 geringer Kraft in Richtung zum Kolben 2 kraftbeaufschlagt, so daß er innerhalb des Enddämpfbereichs 17 an dem Kolben 2 in Anlage ist. Außerhalb des Enddämpfbereichs 17 hebt der Kolben 2 von dem Dämpfkolben 5 ab.

Der Dämpfkolben 5 besitzt an seiner radial umlaufenden Mantelfläche eine radial umlaufende Ringnut 20, in der ein Dämpfdichtring 21 mit axialem Spiel und mit radialem Spiel zum Boden 22 der Ringnut 20 angeordnet ist.

Damit ist der Dämpfdichtring 21 unterströmbar.

Mit seiner radial äußeren umlaufenden Mantelfläche ist der Dämpfdichtring 21 an der Innenwand des Zylinders 1 in Anlage.
Die Ringnut 20 ist über Durchbrüche 23 in der der Dämpfkammer 16 näheren Seitenwand 24 der Ringnut 20 mit der Dämpfkammer 16 verbunden.

Bei axialer Anlage des Dämpfdichtringes 21 an der dem Kolben 2 näheren Seitenwand 25 der Ringnut 20 ist der Dämpfkolben 5 gegenüber der Innenwand 10 des Zylinders 1 abgedichtet.

An der Innenwand 10 des Zylinders 1 ist eine sich über den Enddämpfbereich 17 erstreckende Dämpfnut 27 geringeren Querschnitts ausgebildet.

Zwischen dem Enddämpfbereich 17 und annähernd dem kolbenstangenseitigen Ende des Zylinders 1 ist an dessen Innenwand 10 eine Dämpfungsnut 26 ausgebildet, die einen größeren Querschnitt als die Dämpfnut 27 besitzt und an ihrem dem Enddämpfbereich 17 entgegensetzten Ende nach und nach ihren Querschnitt verringernd ausläuft (nicht dargestellt).

Der Dämpfkolben 5 besitzt einen ringförmigen axial zum Kolben 2 gerichteten Anschlag 28, durch den bei Anlage des Dämpfkolbens 5 an dem Kolben 2 der Dichtungsring 11 von dem Anschlag 13 abgehoben wird, so daß durch Unterströmen des Dichtungsrings 11 Gas weitgehend widerstandslos von der Teilkammer 15 zur ersten Arbeitskammer 3 strömen kann.

In dem Dämpfkolben 5 ist eine axiale topfförmige Ausnehmung 29 ausgebildet, deren Öffnung zum Kolben 2 gerichtet ist und in der ein etwa kugelartiges elastisch verformbares Pufferelement 30 eingesetzt ist, das axial aus der Öffnung herausragt.

Bei einem Gegeneinanderfahren von Kolben 2 und Dämpfkolben 5 kommt es zunächst zu einer elastischen Deformation des Pufferelements 10, ehe Kolben 2 und Dämpfkolben 5 aneinander zur Anlage kommen.

Bei geschlossener Klappe 8 befindet sich diese in der in Figur 11 dargestellten unteren Position. Die Kolbenstange 6 ist eingefahren und hält den Dämpfkolben 5 in seiner dem geschlossenen Ende des Zylinders 1 nächsten Lage.

Bei Lösen des nicht dargestellten Schlosses der Klappe 8 wird der Kolben 2 aufgrund seiner größeren Wirkfläche auf der der Kolbenstange 6 abgewandten Seite vom Gasdruck in Ausfahrrichtung bewegt. Durch die Nachführfeder 19 bleibt dabei der Dämpfkolben 5 zunächst in Anlage an dem Kolben 2, so daß sein Anschlag 28 den Dichtungsring 11 vom Anschlag 13 abgehoben hält. Damit kann durch Unterströmen des Dichtungsrings 11 und durch Überströmen des Dichtungsrings 11 an der Dämpfungsnut 26 Gas weitgehend ungehindert von der ersten Arbeitskammer 3 zur Teilkammer 15 strömen und sich der Kolben 2 weitgehend ungedämpft in Ausfahrrichtung der Kolbenstange 6 verschieben.

Über den ersten Teil I dieses Hubes, der dem Enddämpfbereich 17 entspricht, bewegt sich der Dämpfkolben 5 mit dem Kolben 2 zusammen.

Dabei liegt die Dämpfdichtung 21 an der Seitenwand 24 an, so daß durch Unterströmen der Dämpfdichtung 21 und Überströmen in der Dämpfnut 27 Gas weitgehend ungehindert von der Teilkammer 15 in die Dämpfkammer 16 strömen kann.

Wenn der Dämpfkolben 5 das kolbenseitige Ende des Enddämpfbereichs 17 erreicht hat, bleibt er stehen. Durch die Weiterbewegung des Kolbens 2 hebt der Anschlag 28 von dem Dichtungsring 11 ab, so daß dieser sich zur Anlage an dem Anschlag 13 verschiebt, wodurch ein Unterströmen des Dichtungsrings 11 unterbrochen wird.

Nun folgt in dem folgenden Teil II des Hubes eine Normaldämpfung der Ausfahrbewegung, bei der Gas nur noch über die Dämpfungsnut 26 von der ersten Arbeitskammer 3 zur Teilkammer 15 strömen kann.

Das sich im Querschnitt reduzierende Ende der Dämpfungsnut 26 führt im Teil III des Hubes zu einer sanften Enddämpfung.

Wird nun manuell die Klappe 8 aus ihrer maximal angehobenen Lage wieder in Schließrichtung nach unten bewegt, erfolgt in den Teilen IV und V des Hubes keine spürbare Dämpfung, da nun der Dichtungsring 11 sich zur Anlage an den Anschlag 12 verschiebt, so daß er wieder unterströmbar ist und Gas weitgehend ungehindert von der Teilkammer 15 in die erste Arbeitskammer 3 strömen kann.

Gelangt nun der Kolben an dem Dämpfkolben 5 zur Anlage, muß dieser in Einfahrrichtung mitverschoben werden. Dabei liegt der Dämpfdichtring 21 an der Seitenwand 25 der Ringnut 20 an und sperrt ein Unterströmen des Dämpfdichtringes 21. Ein Strömen von Gas aus der Dämpfkammer 16 in die Teilkammer 15 bzw. die erste Arbeitskammer 3 ist nur noch über die Dämpfnut 27 möglich, so daß der Teil VI des Hubes bis zu Einrasten in das Schloß gedämpft erfolgt.

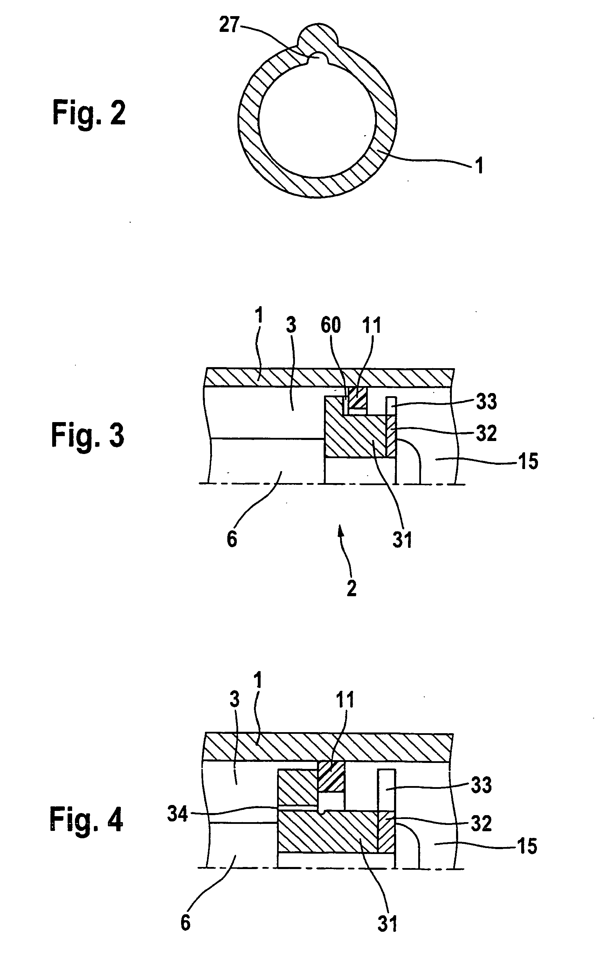

Das in Figur 3 dargestellte Ausführungsbeispiel eines Kolbens 2 besteht aus einem ringförmigen Kolbenteil 31, dessen den Dichtungsring 11 aufnehmende Ringnut zur Teilkammer 15 einseitig offen an der radial umlaufenden Mantelfläche des Kolbenteils 31 ausgebildet ist. Der Anschlag 13 ist durch eine Ringscheibe 32 gebildet, die Durchbrüche 33 aufweist. Kolbenteil 31 und Ringscheibe 32 sind auf der kleinen Stufe der an einem Ende stufig ausgebildeten Kolbenstange 6 angeordnet und durch Umnieten von deren freiem Ende befestigt. In dem Anschlag 12 sind radiale Nuten 60 ausgebildet, durch die bei Anlage des Dichtungsrings 11 an dem Anschlag 12 die erste Arbeitskammer 3 mit der Teilkammer 15 in Verbindung steht.

Das Ausführungsbeispiel der Figur 4 besitzt mit Ausnahme der Nuten 60 den gleichen Aufbau wie das Ausführungsbeispiel in Figur 3. Anstatt der Nuten 60 sind im Kolbenteil 31 Düsen 34 ausgebildet, die den Bodenbereich der Ringnut mit der ersten Arbeitskammer 3 verbinden.

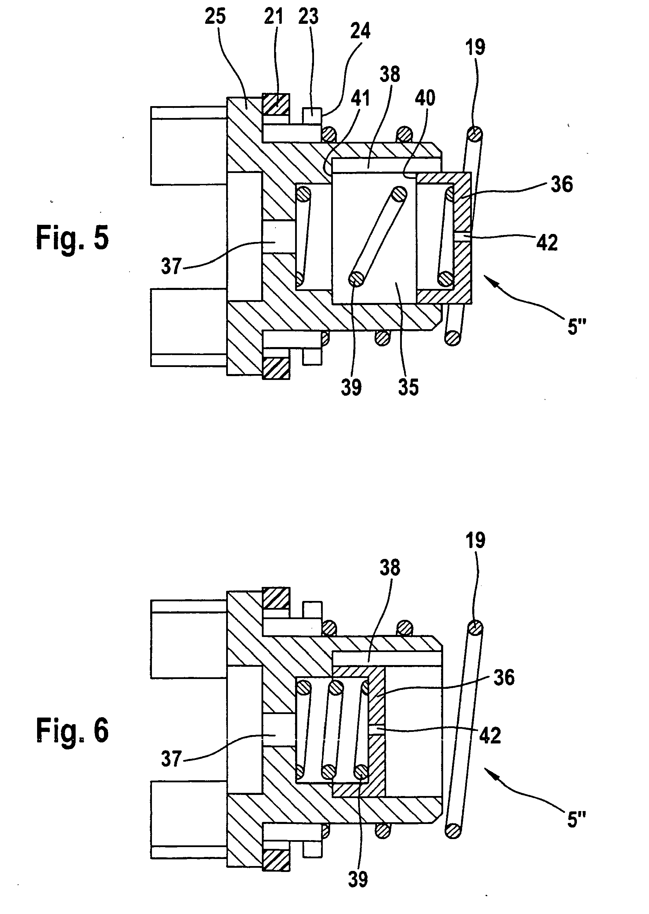

Der Dämpfkolben 5" nach den Figuren 5 und 6 ist mit einer koaxialen topfartigen Führungsöffnung 25 versehen, deren Öffnung zur Dämpfkammer 16 gerichtet ist und in der ein ebenfalls topfartiger Schließschieber 36 verschiebbar angeordnet ist. Über eine Öffnung 37 im Boden der Führungsöffnung 35 ist diese mit der Teilkammer 15 verbunden.

In der zylindrischen Wand der Führungsöffnung 35 ist eine sich axial erstreckende und in die Dampfkammer 16 mündende Steuerungsnut 38 ausgebildet.

Eine Druckfeder 39 ist am Boden der Führungsöffnung 35 abgestützt und beaufschlagt den mit seinem radial umlaufenden ringförmigen Mündungsrand 40 zum Boden der Führungsöffnung 35 gerichteten Schließschieber 36.

Der Boden der Führungsöffnung 35 ist stufig ausgebildet, wobei die radial äußere Stufe eine axial gerichtete Ringschulter 41 bildet, an der der Mündungsrand 40 bei vom Druck der Dämpfkammer 16 entgegen der Kraft der Druckfeder 39 eingeschobenem Schließschieber 36 zur Anlage gelangt (Figur 6) und eine Verbindung der Dämpfkammer 16 über die Steuerungsnut 38, die Führungsöffnung 35 und die Öffnung 37 zur Teilkammer 15 absperrt.

Es ist dann nur noch ein geringer Gasdurchtritt über eine koaxial im Boden des Schließschiebers 36 ausgebildete Düsenbohrung 42 möglich.

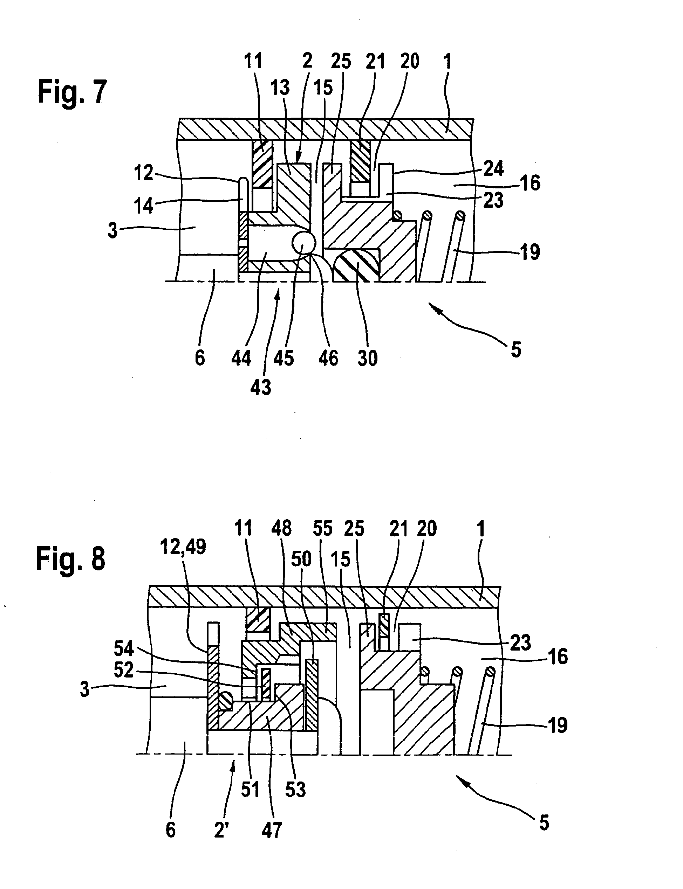

Alternativ zu dem den Dichtungsring 11 von dem Anschlag 13 abhebenden Anschlag 28 in Figur 1 kann entsprechend Figur 7 im Kolben 2 ein Sitzventil 43 in einem Durchgang 44 von der Teilkammer 15 zur ersten Arbeitskammer 3 ausgebildet sein, dessen Ventilglied 45 bei Anlage des Dämpfkolbens 5 an dem Kolben 2 durch den Dämpfkolben 5 von seinem Ventilsitz 46 abgehoben wird.

Eine weitere Möglichkeit für eine solche Funktion ist in Figur 8 dargestellt. Dort besteht der Kolben 2' aus einem ersten, an der Kolbenstange 6 befestigten Kolbenteil 47. Dieses erste Kolbenteil 47 ist von einem koaxial zum ersten Kolbenteil 47 verschiebbaren ringartigen zweiten Kolbenteil 48 umschlossen, welches auch den Dichtungsring 11 trägt. Die axiale Verschiebbarkeit des zweiten Kolbenteils 48 auf dem ersten Kolbenteil 47 wird durch zwei auf der Kolbenstange 6 angeordnete Anschlagscheiben 49 und 50 begrenzt. Die Anschlagscheibe 49 bildet gleichzeitig den Anschlag 12 für den Dichtungsring 11.

Ein Zylinderabschnitt 51 des ersten Kolbenteils 47 ist mit Spiel von einer ringförmigen Dichtung 52 umschlossen, die mit einer Seite ihres radial inneren Bereichs an einer zum zweiten Kolbenteil 48 ragenden Ringschulter 53 des ersten Kolbenteils 47 axial dicht anlegbar ist.

Mit ihrer anderen Seite ist die Dichtung 52 an ihrem überströmbaren radial äußeren Bereich an einer zum ersten Kolbenteil 47 ragenden Ringschulter 54 des zweiten Kolbenteils 48 axial dicht anlegbar.

Bei einer Ausfahrbewegung des Kolbens 2' außerhalb des Enddämpfbereichs 17 verschiebt sich das zweite Kolbenteil 48 relativ zum ersten Kolbenteil 47 in Richtung zur Teilkammer 15. Dadurch gelangen beide Ringschultern 53 und 54 an der Dichtung 52 zur Anlage und sperren eine die Dichtung 52 unter- und überströmbare Verbindung von der Teilkammer 15 zur ersten Arbeitskammer 3 ab.

Ein Ringansatz 55 des zweiten Kolbenteils 48 steht axial zum Dämpfkolben 5 hervor und wird von diesem im Enddämpfbereich 17 derart axial beaufschlagt, daß das zweite Kolbenteil 48 relativ zum ersten Kolbenteil 47 in Richtung zur ersten Arbeitskammer 3 verschoben wird. Damit heben die Ringschulter 53 und 54 von der Dichtung 52 ab, so daß ein Strömungsweg von der ersten Arbeitskammer 3 zur Teilkammer 15 geöffnet ist.

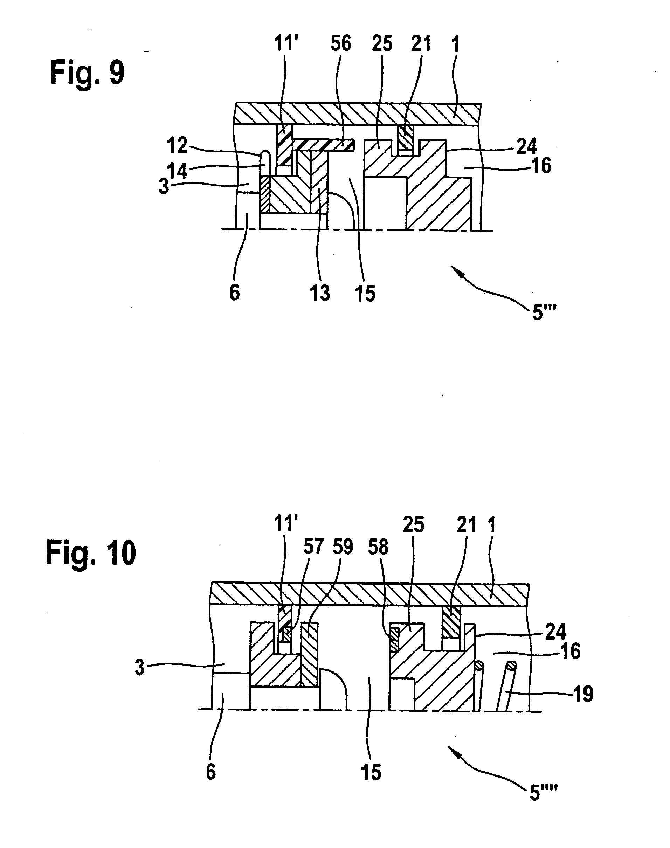

Bei dem Ausführungsbeispiel der Figur 9 ist als kinematische Umkehrung zum Ausführungsbeispiel der Figur 1 anstatt eines Anschlags 28 des Dämpfkolbens 5 am Dichtungsring 11' ein zum Dämpfkolben 5" gerichteter hervorstehender axialer Anschlag 56 angeordnet, der axial von dem Dämpfungskolben 5'" beaufschlagbar und von dem Anschlag 13 abhebbar ist.

Eine weitere Alternative ist in Figur 10 dargestellt. Dort ist an dem Dichtungsring 11" ein axial magnetisierter erster Dauermagnet 57 angeordnet, dem axial ein an dem Dämpfungskolben 5"" angeordneter zweiter Dauermagnet 58 gegenüber liegt.

Der Anschlag 13 ist von einer Anschlagscheibe 59 aus einem Material gebildet, das die Magnetfeder der Dauermagneten 57 und 58 nicht stört.

Da die einander zugewandten Pole der Dauermagnete 57 und 58 gleich sind, kommt es zu einem Abstoßen der Dauermagnete 57 und 58, wenn sie beim Aneinanderliegen von Kolben 2 und Dämpfkolben 5"" einander nahe sind, was im Enddämpfbereich 17 der Fall ist. Dadurch wird der Dichtungsring 11 " in seine öffnende Stellung von der Anschlagscheibe 59 wegbewegt.

### Bezugszeichenliste

- 1: Zylinder
- 2: Kolben
- 2': Kolben
- 3: erste Arbeitskammer
- 4: zweite Arbeitskammer
- 5: Dämpfkolben
- 5": Dämpfkolben
- 5"': Dämpfkolben
- 5"": Dämpfkolben
- 6: Kolbenstange
- 7: Dicht- und Führungspaket
- 8: Klappe
- 9: Schwenkachse
- 10: Innenwand
- 11: Dichtungsring
- 11': Dichtungsring
- 11": Dichtungsring
- 12: Anschlag
- 13: Anschlag
- 14: Durchlässe
- 15: Teilkammer
- 16: Dämpfkammer
- 17: Enddämpfkammer
- 18: Abstützteil
- 19: Nachführfeder
- 20: Ringnut
- 21: Dämpfdichtring
- 22: Boden
- 23: Durchbrüche
- 24: Seitenwand
- 25: Seitenwand
- 26: Dämpfungsnut
- 27: Dämpfnut
- 28: Anschlag
- 29: Ausnehmung
- 30: Pufferelement
- 31: Kolbenteil
- 32: Ringscheibe
- 33: Durchbrüche
- 34: Düsen
- 35: Führungsöffnung
- 36: Schließschieber
- 37: Öffnung
- 38: Steuernut
- 39: Druckfeder
- 40: Mündungsrand
- 41: Ringschulter
- 42: Düsenbohrung
- 43: Sitzventil
- 44: Durchgang
- 45: Ventilglied
- 46: Ventilsitz
- 47: erstes Kolbenteil
- 48: zweites Kolbenteil
- 49: Anschlagscheibe
- 50: Anschlagscheibe
- 51: Zylinderabschnitt
- 52: Dichtung
- 53: Ringschulter
- 54: Ringschulter
- 55: Ringansatz
- 56: Anschlag
- 57: erster Dauermagnet
- 58: zweiter Dauermagnet
- 59: Anschlagscheibe
- 60: Nuten

## Patentansprüche

1. Gasfeder mit einem Zylinder, der mit einem unter Druck stehenden Gas gefüllt ist, mit einer einseitig abgedichtet aus dem Zylinder herausgeführten Kolbenstange, deren in den Zylinder ragendes Ende an einem in dem Zylinder verschiebbaren Kolben befestigt ist, durch den der Innenraum des Zylinders in eine kolbenstangenseitige erste Arbeitskammer und eine kolbenstangenferne zweite Arbeitskammer unterteilt ist, wobei eine der Arbeitskammern durch einen in dem Zylinder verschiebbaren Dämpfkolben einer Endlagendämpfung in eine Dämpfkammer und eine Teilkammer unterteilt ist und der Dämpfkolben im Enddämpfbereich der Einschubbewegung der Kolbenstange durch den Kolben beaufschlagbar und in die Dämpfkammer verschiebbar ist, mit einer Drosselverbindung zwischen der Teilkammer und der Dämpfkammer, deren Drosselwirkung bei Verschiebung des Dämpfkolbens durch den Kolben größer ist als bei dem Kolben nacheilender Verschiebung des Dämpfkolbens und mit einer Drosselverbindung zwischen der Teilkammer und der ersten Arbeitskammer, deren Drosselwirkung bei Einschubbewegung der Kolbenstange kleiner ist als bei Ausschubbewegung der Kolbenstange, **dadurch gekennzeichnet, daß** die Endlagendämpfung in der zweiten Arbeitskammer (4) angeordnet ist, wobei die Dämpfkammer (16) dem verschlossenen Ende des Zylinders (1) und die Teilkammer (15) dem Kolben (2, 2') zugewandt ist, und daß bei Ausschubbewegung der Kolbenstange (6) die Drosselverbindung zwischen der Teilkammer (15) und der ersten Arbeitskammer (3) bei Anlage des Dämpfkolbens (5, 5", 5"', 5"") an dem Kolben (2, 2') eine geringere Drosselwirkung aufweist als bei Nichtanliegen des Dämpfkolbens (5, 5", 5"', 5"") an dem Kolben (2, 2').

2. Gasfeder nach Anspruch 1, **dadurch gekennzeichnet, daß** der Dämpfkolben (5, 5", 5"', 5"") von einer am Zylinder (1) abgestützten Nachführfeder (19) in Richtung zum Kolben (2. 2') kraftbeaufschlagt ist.

3. Gasfeder nach einem der vorhergehenden Ansprüche, **dadurch gekennzeichnet, daß** der Dämpfkolben (5, 5", 5"', 5"") an seiner radial umlaufenden Mantelfläche eine radial umlaufende Ringnut (20) besitzt, in der ein Dämpfdichtungsring (21) mit axialem Spiel und radialem Spiel zum Boden (22) der Ringnut (20) angeordnet ist, der mit seiner radial äußeren umlaufenden Mantelfläche an der Innenwand (10) des Zylinders (1) in Anlage ist.

4. Gasfeder nach Anspruch 3, **dadurch gekennzeichnet, daß** die der Dämpfkammer (16) zugewandte Seitenwand (24) der Ringnut (20) die Ringnut (20) mit der Dämpfkammer (15) verbindende Durchbrüche (23) aufweist.

5. Gasfeder nach einem der vorhergehenden Ansprüche, **dadurch gekennzeichnet , daß** an der Innenwand (10) des Zylinders (1) eine oder mehrere sich zumindest weitgehend über den Enddämpfbereich (17) erstreckende Dämpfnuten (27) ausgebildet sind.

6. Gasfeder nach Anspruch 5, **dadurch gekennzeichnet, daß** die Dämpfnuten einen unterschiedlichen Querschnittsverlauf über ihre Länge besitzen.

7. Gasfeder nach einem der vorhergehenden Ansprüche, **dadurch gekennzeichnet, daß** der Kolben (2) eine oder mehrere die erste Arbeitskammer (3) mit der Teilkammer (15) verbindende Düsen (34) aufweist.

8. Gasfeder nach einem der vorhergehenden Ansprüche, **dadurch gekennzeichnet , daß** im Dämpfkolben (5") ein die Dämpfkammer (16) mit der Teilkammer (15) verbindendes Ventil angeordnet ist, dessen Schießglied vom Druck in der Dämpfkammer (16) aus seiner Offenposition entgegen einer Federkraft in seine Schließposition bewegbar beaufschlagbar ist.

9. Gasfeder nach Anspruch 8, **dadurch gekennzeichnet, daß** das Schließglied ein in einer zylindrischen Führungsöffnung (35) verschiebbar angeordneter Schließschieber (36) ist und in der zylindrischen Wand der Führungsöffnung (35) eine oder mehrere sich axial erstreckende Steuerungsnuten (38) ausgebildet sind.

10. Gasfeder nach Anspruch 9, **dadurch gekennzeichnet, daß** der Schließschieber (36) topfartig ausgebildet ist und mit seinem radial umlaufenden Mündungsrand (40) auf einen ringartigen Ventilsitz des Dämpfkolbens (5") aufsetzbar ist.

11. Gasfeder nach einem der Ansprüche 8 bis 10, **dadurch gekennzeichnet, daß** im Schließglied eine axial durchgehende Düsenbohrung (42) angeordnet ist.

12. Gasfeder nach einem der vorhergehenden Ansprüche, **dadurch gekennzeichnet, daß** der Dämpfkolben (5) über ein elastisch verformbares Pufferelement (30) von dem Kolben (2) verschiebbar beaufschlagbar ist.

13. Gasfeder nach Anspruch 12, **dadurch gekennzeichnet, daß** das elastische Pufferelement (30) in einer topfförmigen Ausnehmung (29) im Dämpfkolben (5) angeordnet ist, deren Öffnung zum Kolben (2) gerichtet ist.

14. Gasfeder nach einem der vorhergehenden Ansprüche, **dadurch gekennzeichnet, daß** an der Innenwand (10) des Zylinders (1) eine oder mehrere sich zwischen dem Enddämpfbereich (17) und dem kolbenstangenseitigen Ende erstreckende Dämpfungsnuten (26) angeordnet sind.

15. Gasfeder nach Anspruch 14, **dadurch gekennzeichnet, daß** die Dämpfungsnuten (26) einen unterschiedlichen Querschnittsverlauf über ihre Länge besitzen.

16. Gasfeder nach einem der vorhergehenden Ansprüche, **dadurch gekennzeichnet, daß** der Kolben (2, 2') von einem mit seiner äußeren radial umlaufenden Mantelfläche an der Innenwand (10) des Zylinders (1) anliegenden Dichtungsring (11, 11', 11") umschlossen ist, der an seinem radial inneren Ringbereich unterströmbar und mit axialem Spiel zwischen zwei Anschlägen (12, 13) bewegbar ist, wobei bei Anlage des Dichtungsrings (11, 11', 11") an dem dem Dämpfkolben (5, 5', 5", 5"', 5"") näheren Anschlag (13) der Kolben (2, 2') gegenüber der Innenwand (10) des Zylinders (1) abgedichtet ist.

17. Gasfeder nach Anspruch 16, **dadurch gekennzeichnet, daß** der Dichtungsring (11, 11') bei axialer Beaufschlagung des Dämpfkolbens (5) durch den Kolben (2) von dem dem Dämpfkolben (5, 5"') näheren Anschlag (13) des Kolbens (2) abgehoben ist.

18. Gasfeder nach Anspruch 17, **dadurch gekennzeichnet , daß** der Dämpfkolben (5) einen zum Kolben (2) gerichteten axialen Anschlag (28) aufweist, durch den der Dichtungsring (11) von dem dem Dämpfkolben (5) näheren Anschlag (13) des Kolbens (2) abhebbar ist.

19. Gasfeder nach Anspruch 17, **dadurch gekennzeichnet, daß** der Dichtungsring (11') einen zum Dämpfkolben (5"') gerichteten hervorstehenden axialen Anschlag (56) aufweist, der axial an den Dämpfungskolben (5"') anlegbar ist.

20. Gasfeder nach Anspruch 17, **dadurch gekennzeichnet, daß** an dem Dichtungsring (11 ") ein axial magnetisierter erster Dauermagnet (57) angeordnet ist, dem ein an dem Dämpfkolben (5"') angeordneter weiterer Dauermagnet (58) axial gegenüber liegt, wobei gleiche Pole von erstem Dauermagnet (57) und weiterem Dauermagnet (58) einander zugewandt sind.

21. Gasfeder nach Anspruch 16, **dadurch gekennzeichnet, daß** in dem Kolben (2) ein Ventil angeordnet ist, das bei axialer Beaufschlagung des Kolbens (2) durch den Dämpfkolben (5) die Teilkammer (15) mit der ersten Arbeitskammer (3) verbindend geöffnet ist.

22. Gasfeder nach Anspruch 21, **dadurch gekennzeichnet, daß** das Ventil ein Sitzventil (43) ist, dessen Ventilglied (45) durch den Dämpfkolben (5) von seinem Ventilsitz (46) abhebbar ist.

23. Gasfeder nach Anspruch 16, **dadurch gekennzeichnet, daß** der Kolben (2') aus einem ersten, an der Kolbenstange (6) befestigten Kolbenteil (47) besteht, das von einem koaxial zum ersten Kolbenteil (47) verschiebbaren und den Dichtungsring (11) tragenden ringartigen zweiten Kolbenteil (48) umschlossen ist, mit einer einen Zylinderabschnitt (51) des ersten Kolbenteils (47) mit Spiel umschließenden ringförmigen Dichtung (52), die mit ihrem radial inneren Bereich an einer zum zweiten Kolbenteil (48) ragenden Ringschulter (53) des ersten Kolbenteils (47) und die mit ihrem überströmbaren radial äußeren Bereich an einer zum ersten Kolbenteil (47) ragenden Ringschulter (54) des zweiten Kolbenteils (48) axial dicht anlegbar ist, wobei die Ringschulter (54) des zweiten Kolbenteils (48) bei dessen axialer Beaufschlagung durch den Dämpfkolben (5) die Teilkammer (15) mit der ersten Arbeitskammer (3) verbindend von der Ringschulter (53) des ersten Kolbenteils (47) wegbewegbar ist.

## Claims

1. Gas spring having a cylinder which is filled with pressurized gas, having a piston rod which is led out of the cylinder on one side in a sealed-off manner and whose end projecting into the cylinder is fastened to a piston which is displaceable in the cylinder and by means of which the interior space of the cylinder is subdivided into a first working chamber on the piston-rod side and a second working chamber remote from the piston rod, one of the working chambers being subdivided into a damping chamber and a partial chamber by an end-position-damping piston displaceable in the cylinder, and it being possible for the piston to act upon the damping piston in the end damping region of the push-in movement of the piston rod and to displace the damping piston into the damping chamber, having a choke connection between the partial chamber and the damping chamber, the choke effect of which is greater during displacement of the damping piston by the piston than during displacement of the damping piston trailing behind the piston, and having a choke connection between the partial chamber and the first working chamber, the choke effect of which is smaller during a push-in movement of the piston rod than during a push-out movement of the piston rod, **characterized in that** the end position damping is arranged in the second working chamber (4), the damping chamber (16) facing the closed end of the cylinder (1) and the partial chamber (15) facing the piston (2, 2'), and **in that**, during a push-out movement of the piston rod (6), the choke connection between the partial chamber (15) and the first working chamber (3) has a smaller choke effect when the damping piston (5, 5' ', 5"', 5"") is bearing against the piston (2, 2') than when the damping piston (5, 5" 5"', 5"") is not bearing against the piston (2, 2').

2. Gas spring according to Claim 1, **characterized in that** force can be applied to the damping piston (5, 5", 5"', 5"") in the direction of the piston (2, 2') by a compensating spring (19) supported on the cylinder (1).

3. Gas spring according to one of the preceding claims, **characterized in that** the damping piston (5, 5" , 5"' , 5""), on its radially encircling lateral surface, has a radially encircling annular groove (20) in which a damping sealing ring (21) is arranged with axial clearance and with radial clearance relative to the base (22) of the annular groove (20), this damping sealing ring (21) bearing with its radially outer encircling lateral surface against the inner wall (10) of the cylinder (1).

4. Gas spring according to Claim 3, **characterized in that that** side wall (24) of the annular groove (20) which faces the damping chamber (16) has apertures (23) connecting the annular groove (20) to the damping chamber (15).

5. Gas spring according to one of the preceding claims, **characterized in that** one or more damping grooves (27) which extend at least largely over the end damping region (17) are formed on the inner wall (10) of the cylinder (1).

6. Gas spring according to Claim 5, **characterized in that** the damping grooves have a varying cross-sectional profile over their length.

7. Gas spring according to one of the preceding claims, **characterized in that** the piston (2) has one or more nozzles (34) connecting the first working chamber (3) to the partial chamber (15).

8. Gas spring according to one of the preceding claims, **characterized in that** a valve connecting the damping chamber (16) to the partial chamber (15) is arranged in the damping piston (5"), and the closing member of this valve can be acted upon by the pressure in the damping chamber (16) in such a way that it can be moved from its open position into its closed position against a spring force.

9. Gas spring according to Claim 8, **characterized in that** the closing member is a closing slide (36) displaceably arranged in a cylindrical guide opening (35), and one or more axially extending control grooves (38) are formed in the cylindrical wall of the guide opening (35).

10. Gas spring according to Claim 10, **characterized in that** the closing slide (36) is of pot-like design and its radially encircling orifice margin (40) can be put onto an annular valve seat of the damping piston (5'').

11. Gas spring according to one of Claims 8 to 10, **characterized in that** an axially continuous nozzle bore (42) is arranged in the closing member.

12. Gas spring according to one of the preceding claims, **characterized in that** the damping piston (5) can be acted upon in a displaceable manner by the piston (2) via an elastically deformable buffer element (30).

13. Gas spring according to Claim 12, **characterized in that** the elastic buffer element (30) is arranged in a pot-shaped recess (29) in the damping piston (5), the opening of this recess (29) being directed towards the piston (2).

14. Gas spring according to one of the preceding claims, **characterized in that** one or more damping grooves (26) extending between the end damping region (17) and the piston-rod-side end are arranged on the inner wall (10) of the cylinder (1).

15. Gas spring according to Claim 14, **characterized in that** the damping grooves (26) have a varying cross-sectional profile over their length.

16. Gas spring according to one of the preceding claims, **characterized in that** the piston (2,2') is enclosed by a sealing ring (11, 11', 11") which bears with its outer radially encircling lateral surface against the inner wall (10) of the cylinder (1), and under which flow can occur at its radially inner annular region and which can be moved with axial clearance between two stops (12, 13), the piston (2, 2') being sealed off relative to the inner wall (10) of the cylinder (1) when the sealing ring (11, 11', 11") bears against the stop (13) closer to the damping piston (5, 5", 5"', 5"").

17. Gas spring according to Claim 16, **characterized in that** the sealing ring (11, 11'), when the damping piston (5) is acted upon axially by the piston (2), is lifted from that stop (13) of the piston (2) which is closer to the damping piston (5, 5"').

18. Gas spring according to Claim 17, **characterized in that** the damping piston (5) has an axial stop (28) which is directed towards the piston (2) and by means of which the sealing ring (11) can be lifted from that stop (13) of the piston (2) which is closer to the damping piston (5).

19. Gas spring according to Claim 17, **characterized in that** the sealing ring (11') has a projecting axial stop (56) which is directed towards the damping piston (5"') and can be placed axially against the damping piston (5''').

20. Gas spring according to Claim 17, **characterized in that** an axially magnetized first permanent magnet (57) is arranged on the sealing ring (11"), a further permanent magnet (58) arranged on the damping piston (5"') being located axially opposite this first permanent magnet (57), the like poles of the first permanent magnet (57) and the further permanent magnet (58) facing one another.

21. Gas spring according to Claim 16, **characterized in that** a valve is arranged in the piston (2), which valve, when the piston (2) is acted upon axially by the damping piston (5), is open in such a way as to connect the partial chamber (15) to the first working chamber (3).

22. Gas spring according to Claim 21, **characterized in that** the valve is a seat valve (43), the valve member (45) of which can be lifted from its valve seat (46) by the damping piston (5).

23. Gas spring according to Claim 16, **characterized in that** the piston (2') consists of a first piston part (47) which is fastened to the piston rod (6) and is enclosed by an annular second piston part (48) which is displaceable coaxially relative to the first piston part (47) and carries the sealing ring (11), having an annular seal (52) which encloses a cylindrical section (51) of the first piston part (47) with clearance and which, with its radially inner region, can be brought axially into tight contact with an annular shoulder (53), projecting towards the second piston part (48), of the first piston part (47) and which, with its radially outer region over which flow can occur, can be brought axially into tight contact with an annular shoulder (54), projecting towards the first piston part (47), of the second piston part (48), it being possible for the annular shoulder (54) of the second piston part (48), when it is acted upon axially by the damping piston (5), to be moved away from the annular shoulder (53) of the first piston part (47) in such a way as to connect the partial chamber (15) to the first working chamber (3).

## Revendications

1. Ressort à gaz comprenant un cylindre qui est rempli de gaz sous pression, comprenant une tige de piston guidée hors du cylindre de manière étanche d'un côté, dont l'extrémité pénétrant dans le cylindre est fixée à un piston déplaçable dans le cylindre, qui sépare l'espace interne du cylindre en une première chambre de travail du côté de la tige de piston et une deuxième chambre de travail du côté opposé à la tige de piston, l'une des chambres de travail étant divisée par un piston d'amortissement d'un amortissement de fin de course déplaçable dans le cylindre en une chambre d'amortissement et une chambre partielle et le piston d'amortissement pouvant être sollicité par le piston dans la région de fin d'amortissement du déplacement d'enfoncement de la tige de piston et pouvant être déplacé dans la chambre d'amortissement, avec une connexion par étranglement entre la chambre partielle et la chambre d'amortissement, dont l'effet d'étranglement lors du déplacement du piston d'amortissement par le piston est plus important que lors du déplacement du piston d'amortissement suivant le piston, et avec une connexion par étranglement entre la chambre partielle et la première chambre de travail, dont l'effet d'étranglement lors du mouvement d'enfoncement de la tige de piston est plus faible que lors du mouvement de sortie de la tige de piston, **caractérisé en ce que** l'amortissement de fin de course est prévu dans la deuxième chambre de travail (4), la chambre d'amortissement (16) étant tournée vers l'extrémité du cylindre (1) fermée et la chambre partielle (15) étant tournée vers le piston (2, 2'), et **en ce que** lors du mouvement de sortie de la tige de piston (6), la connexion d'étranglement entre la chambre partielle (15) et la première chambre de travail (3) lors de l'application du piston d'amortissement (5, 5", 5"', 5"") contre le piston (2, 2') présente un effet d'étranglement plus faible que lorsque le piston d'amortissement (5, 5", 5"', 5"") ne s'applique pas contre le piston (2, 2').

2. Ressort à gaz selon la revendication 1, **caractérisé en ce que** le piston d'amortissement (5, 5", 5"', 5"") est sollicité en force par un ressort suiveur (19) supporté sur le cylindre (1) dans la direction du piston (2, 2').

3. Ressort à gaz selon l'une quelconque des revendications précédentes, **caractérisé en ce que** le piston d'amortissement (5, 5", 5"', 5"") possède sur sa surface d'enveloppe radialement périphérique une rainure annulaire radialement périphérique (20) dans laquelle est disposée une bague d'étanchéité d'amortissement (21) avec un jeu axial et un jeu radial par rapport au fond (22) de la rainure annulaire (20), qui est en appui avec sa surface d'enveloppe périphérique radialement extérieure contre la paroi interne (10) du cylindre (1).

4. Ressort à gaz selon la revendication 3, **caractérisé en ce que** la paroi latérale (24) de la rainure annulaire (20) tournée vers la chambre d'amortissement (16) présente des passages (23) reliant la rainure annulaire (20) à la chambre d'amortissement (15).

5. Ressort à gaz selon l'une quelconque des revendications précédentes, **caractérisé en ce qu'**une ou plusieurs rainures d'amortissement (27) s'étendant au moins essentiellement sur la région de fin d'amortissement (17) sont réalisées sur la paroi interne (10) du cylindre (1).

6. Ressort à gaz selon la revendication 5, **caractérisé en ce que** les rainures d'amortissement possèdent une allure en section transversale différente sur leur longueur.

7. Ressort à gaz selon l'une quelconque des revendications précédentes, **caractérisé en ce que** le piston (2) présente une ou plusieurs buses (34) reliant la première chambre de travail (3) à la chambre partielle (15).

8. Ressort à gaz selon l'une quelconque des revendications précédentes, **caractérisé en ce que** dans le piston d'amortissement (5") est disposée une soupape reliant la chambre d'amortissement (16) à la chambre partielle (15), dont l'organe de fermeture peut être sollicité par la pression dans la chambre d'amortissement (16) de manière à pouvoir être déplacé de sa position d'ouverture à l'encontre d'une force de ressort dans sa position de fermeture.

9. Ressort à gaz selon la revendication 8, **caractérisé en ce que** l'organe de fermeture est un coulisseau de fermeture (36) disposé de manière déplaçable dans une ouverture de guidage cylindrique (35) et une ou plusieurs rainures de commande (38) s'étendant axialement sont réalisées dans la paroi cylindrique de l'ouverture de guidage (35).

10. Ressort à gaz selon la revendication 9, **caractérisé en ce que** le coulisseau de fermeture (36) est réalisé sous forme de pot et peut être posé avec son bord d'embouchure (40) radialement périphérique sur un siège de soupape annulaire du piston d'amortissement (5").

11. Ressort à gaz selon l'une quelconque des revendications 8 à 10, **caractérisé en ce qu'**un alésage de buse (42) s'étendant axialement est disposé dans l'organe de fermeture.

12. Ressort à gaz selon l'une quelconque des revendications précédentes, **caractérisé en ce que** le piston d'amortissement (5) peut être sollicité par le biais d'un élément tampon déformable élastiquement (30) de manière à pouvoir être déplacé par le piston (2).

13. Ressort à gaz selon la revendication 12, **caractérisé en ce que** l'élément tampon élastique (30) est disposé dans un évidement en forme de pot (29) dans le piston d'amortissement (5), dont l'ouverture est orientée vers le piston (2).

14. Ressort à gaz selon l'une quelconque des revendications précédentes, **caractérisé en ce que** l'on prévoit sur la paroi interne (10) du cylindre (1) une ou plusieurs rainures d'amortissement (26) s'étendant entre la région de fin d'amortissement (17) et l'extrémité du côté de la tige de piston.

15. Ressort à gaz selon la revendication 14, **caractérisé en ce que** les rainures d'amortissement (26) possèdent une allure en section transversale différente sur leur longueur.

16. Ressort à gaz selon l'une quelconque des revendications précédentes, **caractérisé en ce que** le piston (2, 2') est entouré par une bague d'étanchéité (11, 11', 11") s'appliquant avec sa surface d'enveloppe extérieure radialement périphérique contre la paroi interne (10) du cylindre (1), qui peut être parcourue par l'écoulement par le dessous au niveau de sa région annulaire radialement interne et qui peut être déplacée avec un jeu axial entre deux butées (12, 13), l'étanchéité du piston (2, 2') par rapport à la paroi interne (10) du cylindre (1) se produisant par l'application de la bague d'étanchéité (11, 11', 11") contre la butée (13) plus proche du piston d'amortissement (5, 5', 5", 5"', 5"").

17. Ressort à gaz selon la revendication 16, **caractérisé en ce que** la bague d'étanchéité (11, 11') est soulevée de la butée (13) du piston (2) plus proche du piston d'amortissement (5, 5"') en cas de sollicitation axiale du piston d'amortissement (5) par le piston (2).

18. Ressort à gaz selon la revendication 17, **caractérisé en ce que** le piston d'amortissement (5) présente une butée axiale (28) orientée vers le piston (2), qui permet de soulever la bague d'étanchéité (11) de la butée (13) du piston (2) plus proche du piston d'amortissement (5).

19. Ressort à gaz selon la revendication 17, **caractérisé en ce que** la bague d'étanchéité (11') présente une butée axiale (56) saillant et orientée vers le piston d'amortissement (5"'), qui peut être appliquée axialement contre le piston d'amortissement (5"').

20. Ressort à gaz selon la revendication 17, **caractérisé en ce qu'**un premier aimant permanent (57) aimanté axialement est disposé sur la bague d'étanchéité (11"), lequel est placé axialement en regard d'un autre aimant permanant (58) disposé sur le piston d'amortissement (5"'), les deux pôles du premier aimant permanent (57) et de l'autre aimant permanent (58) étant tournés l'un vers l'autre.

21. Ressort à gaz selon la revendication 16, **caractérisé en ce qu'**une soupape est disposée dans le piston (2), laquelle est ouverte de manière à relier la chambre partielle (15) à la première chambre de travail (3) en cas de sollicitation axiale du piston (2) par le piston d'amortissement (5).

22. Ressort à gaz selon la revendication 21, **caractérisé en ce que** la soupape est une soupape à siège (43) dont l'organe de soupape (45) peut être soulevé de son siège de soupape (46) par le piston d'amortissement (5).

23. Ressort à gaz selon la revendication 16, **caractérisé en ce que** le piston (2') se compose d'une première partie de piston (47) fixée à la tige de piston (6), qui est entourée par une deuxième partie de piston (48) annulaire déplaçable coaxialement par rapport à la première partie de piston (47) et portant la bague d'étanchéité (11), avec un joint d'étanchéité (52) de forme annulaire entourant avec jeu une portion cylindrique (51) de la première partie de piston (47), qui peut être appliqué hermétiquement axialement avec sa région radialement interne contre un épaulement annulaire (53) de la première partie de piston (47) saillant vers la deuxième partie de piston (48) et qui peut être appliqué avec sa région radialement extérieure pouvant être parcourue par l'écoulement par le dessus contre un épaulement annulaire (54) de la deuxième partie de piston (48) saillant vers la première partie de piston (47), l'épaulement annulaire (54) de la deuxième partie de piston (48) pouvant être écarté de l'épaulement annulaire (53) de la première partie de piston (47) en reliant la chambre partielle (15) à la première chambre de travail (3), lorsqu'il est sollicité axialement par le piston d'amortissement (5).
